# FASCICULE DE BREVET EUROPEEN

(11) **EP 1 303 730 B1**
(45) Date de publication et mention de la délivrance du brevet: **13.04.2005**
(21) Numéro de dépôt: 01956603.3
(22) Date de dépôt: 18.07.2001
(51) Int. Cl.: F25B 41/06, B60H 1/00, B60H 1/32, F16L 33/207

(54) **DISPOSITIF DETENDEUR POUR FLUIDE FRIGORIGENE ET CIRCUIT DE CONDITIONNEMENT COMPRENANT UN TEL DISPOSITIF**
ENTSPANNUNGSVORRICHTUNG FÜR KÜHLMITTEL UND EINE SOLCHE VORRICHTUNG ENTHALTENDER KÜHLKREISLAUF
EXPANSION DEVICE FOR REFRIGERANT FLUID AND CONDITIONING CIRCUIT COMPRISING SAME

(30) Priorité: 20.07.2000 FR 0009554
(43) Date de publication de la demande: 23.04.2003
(73) Titulaire: Manuli Auto France, 28000 Chartres (FR)
(72) Inventeur: BARON, Daniel, F-28630 Fontenay-sur-Eure (FR)
(74) Mandataire: Benech, Frédéric
(86) Numéro de dépôt international: PCT/FR2001/002338
(87) Numéro de publication internationale: WO 2002/008677

(56) Documents cités:
- EP-A- 0 943 879
- WO-A-83/04297
- FR-A- 2 764 960
- US-A- 3 642 030
- US-A- 4 324 112
- US-A- 5 081 847
- US-A- 5 215 660
- US-A- 5 655 387
- US-A- 5 961 157

## Description

La présente invention concerne un dispositif détendeur pour fluide frigorigène appartenant à un circuit comprenant un tuyau souple.

Elle concerne également un circuit de conditionnement d'air pour réaliser la détente d'un gaz comprenant un tel dispositif.

Elle trouve une application particulièrement importante bien que non exclusive dans le domaine des circuits refroidisseurs et de climatisation de véhicule automobile.

On connaît déjà des dispositifs de détente des gaz pour circuit refroidisseur de véhicule. Ceux-ci comprennent des orifices calibrés mis en place dans des logements spécifiques intercalés sur le circuit.

Un tel montage en ligne présente des inconvénients.

En effet, il nécessite notamment des joints toriques pour assurer l'étanchéité des logements, difficile à mettre en place ou à disposer dans un circuit de climatisation automobile. Il en résulte des problèmes d'encombrement et d'étanchéité.

La présente invention vise à fournir un dispositif détendeur, et un circuit de conditionnement d'air pour réaliser la détente d'un gaz, répondant mieux que ceux antérieurement connus aux exigences de la pratique, notamment en ce qu'elle permet une fabrication optimisée du fait d'une conception simple et économique, facile à mettre en oeuvre, présentant un encombrement quasi nul sur le circuit, et ce pour un coût faible.

Le dispositif proposé par l'invention réalise en effet parfaitement la fonction de détente adiabatique du fluide frigorigène avec un rendement identique à celui d'un orifice classique, tout en autorisant une excellente étanchéité du circuit.

Dans ce but la présente invention propose notamment un dispositif détendeur selon le preambule de la revendication 1. Un tel dispositif est connu du document US-A-4 324 112.

L'insert de la revendication 1 est propre à être inséré dans l'embout de tube rigide à frottement ou avantageusement en force.

Dans des modes de réalisation avantageux, on a de plus recours à l'une et/ou à l'autre des dispositions suivantes :
- le tamis est formé par un tronc de cône en matière plastique poreuse fixé sur la partie amont et/ou aval de l'insert, par exemple par surmoulage ;
- l'ajutage calibré est de diamètre compris entre 0, 7 mm et 2 mm, et de longueur comprise entre 30 mm et 50 mm ;
- l'insert est propre à être disposé à la jonction entre un embout de tube rigide et l'extrémité dudit tuyau souple flexible, et comporte d'un côté une partie tubulaire propre à être insérée en force dans l'extrémité du tuyau, en vis-à-vis de l'élément de fixation, et de l'autre côté une partie propre à être insérée dans l'embout de tube rigide ;
- l'insert comporte au moins une gorge annulaire équipée d'un joint torique d'étanchéité avec l'embout de tube rigide ;
- l'insert comporte au moins une gorge annulaire équipée d'un joint torique d'étanchéité avec l'extrémité du tuyau.

L'invention concerne également un circuit de conditionnement d'air pour réaliser la détente d'un gaz, comprenant un dispositif de type décrit ci-dessus.

Plus particulièrement elle concerne aussi un circuit de conditionnement d'air pour réaliser la détente d'un gaz, selon la revendication 8.

Avantageusement la douille de sertissage est constituée par une partie distale du tube

Dans un autre mode de réalisation avantageux, l'élément de sertissage est constituée par un manchon d'extrémité rapporté, fixé de façon inamovible sur le tube.

La présente invention sera mieux comprise à la lecture de la description qui suit d'un mode de réalisation particulier donné à titre d'exemple.

Elle se réfère aux dessins qui l'accompagnent dans lesquels :
- La figure 1 est une vue en perspective d'un circuit selon un mode de réalisation de l'invention.
- La figure 2 est une vue en demi-coupe longitudinale d'un dispositif selon un mode de réalisation de l'invention.

Dans la suite de la description, et s'il y a lieu, les mêmes numéros de référence seront utilisés pour désigner les mêmes éléments.

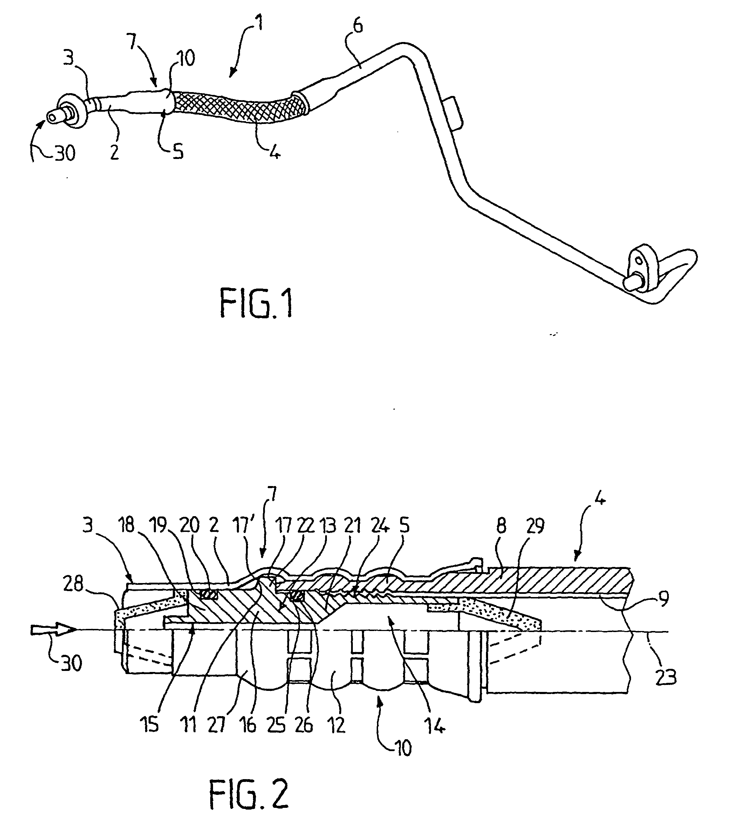

La figure 1 montre un circuit détendeur 1, de raccordement étanche entre un condenseur et un évaporateur (non représentés). Il comporte un embout 2 de tube rigide 3 par exemple en aluminium et un tuyau 4 souple, en matériau composite muni d'une extrémité 5.

Le tuyau est lui-même relié de l'autre côté à un autre tube rigide 6.

Le circuit 1 comporte un dispositif 7 qui, selon le mode de réalisation de l'invention plus particulièrement décrit en référence à la figure 2, est disposé à la jonction entre l'extrémité 5 du tuyau souple 4 et l'embout 2 de tube rigide.

Le tuyau 4 est constitué d'une enveloppe externe cylindrique en élastomère 8, par exemple en caoutchouc, et d'une âme cylindrique 9, en matériau rigide comme par exemple une matière plastique connue sous la dénomination NYLON.

Mais dans d'autres modes de réalisation particuliers, le tuyau n'a pas d'âme rigide et/ou comporte une tresse cylindrique intermédiaire.

L'embout 2 est quant à lui élargi à sa partie terminale 10 pour former avec sa face interne un épaulement 11 de forme tronconique, entre le diamètre intérieur nominal du tube et jusqu'à un diamètre compris entre 1,1 et 2,5 fois le diamètre intérieur, par exemple compris entre 1,5 fois et 2 fois le diamètre intérieur nominal du tube.

L'élargissement est par exemple obtenu par passage de plusieurs poinçons, par exemple trois passes ou étapes successives.

Le demi angle de conicité de la partie tronconique est par exemple compris entre de l'ordre de 20° et de l'ordre de 40°, par exemple de l'ordre de 20°, comme représenté sur la figure 2.

Cet élargissement peut par exemple être effectué sur une longueur de l'embout compris entre 20 mm et 60 mm, par exemple sur 40 mm, pour constituer une partie 12 en forme de douille.

Le dispositif 7 comporte également un insert rigide 13 en acier ou en polymère renforcé, évidé de bout en bout sur une première longueur située sensiblement en vis-à-vis de l'élargissement de l'embout par un alésage cylindrique 14 de grand diamètre, et sur une deuxième longueur pour l'ajutage 15 selon l'invention, par exemple de diamètre 1,43 mm et sur une longueur de 40 mm.

Dans ce mode de réalisation, l'insert comprend du côté de l'ajutage une partie 16 munie d'une collerette 17 dont la face externe supérieure 17' est de forme complémentaire et/ou propre à être en butée avec l'épaulement 11.

L'insert comporte, dans le prolongement et inséré à frottement et/ou à force, par exemple lors de la troisième passe décrite ci-dessus, dans la partie non déformée du tube 3 de diamètre intérieur déterminé, à partir de la collerette 17, un embout d'extrémité tubulaire 18 solidaire, ou d'une pièce, avec ladite collerette 17 et le reste de l'insert, par exemple de l'ordre de 15 mm de longueur, comprenant une gorge périphérique annulaire 19 munie d'un joint torique 20.

L'insertion en force se fait avec un serrage compris entre 0,1 mm et 0,2 mm au diamètre.

Un tel montage permet d'obtenir une étanchéité renforcée, malgré le grippage attendu et les risques de coincement du joint.

Le diamètre de l'embout d'extrémité tubulaire 18 est par ailleurs sensiblement égal ou légèrement supérieur, par exemple d'l mm ou de 2 mm, au diamètre interne de la partie tubulaire 2.

L'insert comprend de l'autre côté une partie tubulaire 21 insérée en force dans l'extrémité 5 du tuyau 54 jusqu'à venir en butée sur la face 22 de la collerette 17, par exemple perpendiculaire à l'axe 23 du dispositif.

La partie 21 comprend plusieurs gorges par exemple sept gorges 24 en queue de sapin pour faciliter l'adhérence du tuyau, une gorge annulaire 25 équipée d'un joint torique 26 et/ou des joints spéciaux HNBR, butyle ou équivalent, directement obtenus par surmoulage avec adhérence sur le support acier constitué par la paroi externe de l'insert et/ou plusieurs gorges rondes (non représentées).

L'insert est par exemple usiné soit par tournage, soit par roulage à partir de tubes avant d'être équipé de systèmes d'étanchéité par joints toriques ou joints spéciaux comme cela vient d'être décrit.

Il peut également être obtenu, dans le cas d'un insert un matière plastique, par moulage.

La configuration retenue permet une grande souplesse d'adaptation du dispositif.

En effet, la forme de l'insert en acier ou en matière plastique peut être travaillée différemment en fonction du tuyau à raccorder, par exemple avec des gorges queue de sapin, des gorges rondes, des gorges en créneaux, etc.

Elle permet une utilisation sans joint torique ou avec un seul joint ou encore plusieurs joints, sans changer le procédé général de fabrication.

La matière en élastomère des joints peut être adaptée en fonction des produits à véhiculer.

Enfin, le dispositif selon l'invention peut être décliné, ici encore de façon simple et adaptable, dans toutes les dimensions standards connues (en millimètres) : 5/16, 13/32, 1/2, 5/8, 3/4, à partir des tubes standards du marché de diamètres : 9,52 ; 12,7 ; 15,88 ; 19,05 ou pour les tubes à diamètre millimétrique : 10, 12, 16, 18 et 20 mm.

Enfin, un sertissage, par exemple avec trois ou quatre dents, de la partie 12 en forme de douille sur l'extrémité 5 du tuyau souple 4 est réalisé.

La tenue mécanique du tuyau et de l'insert à l'arrachement longitudinal, lors d'un effort de traction mécanique dû ou non à la pression, est par ailleurs assurée par ce sertissage, grâce notamment à la dent 27, qui retient l'insert dont la collerette 17 est bloquée de l'autre côté par l'épaulement 11.

Les gorges 24 augmentent quant à elles l'adhérence du tuyau par rapport au sertissage extérieur.

Dans le mode de réalisation plus particulièrement décrit ici, le dispositif comporte de plus deux filtres 28 et 29 en tamis à maille fine, par exemple 60µ, directement surmoulé sur l'insert, par exemple si celui-ci est en matière plastique, ou rapporté, si l'insert est métallique par exemple.

Ces tamis sont formés par des troncs de cône en matière plastique poreuse dont le sommet est dirigé vers l'extérieur de l'insert. Ils sont fixés sur l'insert en amont et en aval de ce dernier, par exemple par collage.

On va maintenant décrire sommairement le procédé de fabrication du dispositif 1 en référence à la figure 2.

On élargit tout d'abord la partie terminale de l'embout de tube, puis on introduit l'insert en force dans le tube, l'insert ayant été préalablement préparé avec ses joints d'étanchéité, on introduit en force le tuyau sur le tube et on sertit.

Lorsque le fluide (flèche 30) pénètre dans l'insert, il passe par un premier filtre 28, par l'ajutage 17, puis du fait du brusque élargissement dans la partie cylindrique 14 de grand diamètre, il se détend adiabatiquement avant de sortir au travers du filtre 29.

Comme il va de soi et comme il résulte d'ailleurs de ce qui précède, l'invention ne se limite pas aux modes de réalisation plus particulièrement décrits.

Elle en embrasse au contraire toutes les variantes et notamment celles où l'insert est en matière plastique moulée renforcée, celles où le tube est en acier ou en un autre métal que l'aluminium ou un alliage d'aluminium, celles où le tuyau souple est par exemple renforcé par des armatures et/ou comprend une enveloppe externe de protection, celles où il est prévu de plus une fixation par collage de l'insert sur le tube, celles où la partie tubulaire de l'insert introduite dans le tuyau s'étend sensiblement au delà de la partie sertie, et celles où les filtres sont constitués de façon différente, par exemple en tissu tressé, celle où l'insert est introduit entièrement dans le tuyau souple, et bloqué par le biais d'une bague de compression dans le tuyau souple, celle où le ou les joints toriques sont remplacés par une colle d'étanchéité.

## Revendications

1. Dispositif (7) détendeur pour fluide frigorigène appartenant à un circuit comprenant un tuyau souple (4), et un insert (13) percé de part en part d'un alésage (14, 15) formé au moins en partie par un ajutage (15) calibré propre à assurer une détente adiabatique en ligne, et un élément (10) de fixation dudit insert sur l'extrémité du tuyau souple ou à l'intérieur dudit tuyau souple, **caractérisé en ce qu'**il comporte au moins un tamis (28, 29) en ligne.

2. Dispositif détendeur selon la revendication 1, **caractérisé en ce que** le tamis (28, 29) est formé par un tronc de cône en matière plastique poreuse fixé sur la partie amont et/ou aval de l'insert, par exemple par un surmoulage.

3. Dispositif détendeur selon la revendication 1, **caractérisé en ce que** le tamis (28, 29) est un filtre en tissus tressé

4. Dispositif détenteur selon l'une quelconque des revendications précédentes, **caractérisé en ce que** l'ajutage calibré (15) est de diamètre compris entre 0,7 mm et 2 mm, et de longueur comprise entre 30 mm et 50 mm.

5. Dispositif détendeur selon l'une quelconque des revendications précédentes, **caractérisé en ce que** l'insert (13) est propre à être disposé à la jonction entre un embout (2) de tube rigide (3) et l'extrémité (5) dudit tuyau souple flexible (14), et comporte d'un côté une partie tubulaire (21) propre à être insérée en force dans l'extrémité du tuyau, en vis-à-vis de l'élément de fixation, et de l'autre côté une partie (16) propre à être insérée dans l'embout de tube rigide.

6. Dispositif selon la revendication 5,
**caractérisé en ce que** l'insert (13) comporte au moins une gorge annulaire (19) équipée d'un joint torique (20) d'étanchéité avec l'embout de tube rigide.

7. Dispositif détendeur selon l'une quelconque des revendications précédentes, **caractérisé en ce que** l'insert (13) comporte au moins une gorge annulaire (25) équipée d'un joint torique (26) d'étanchéité avec le tuyau.

8. Circuit (1) de conditionnement d'air pour réaliser la détente d'un gaz, comprenant un tube rigide (3) muni d'un embout (2), un tuyau souple flexible (4), et une douille de sertissage (10) de l'embout sur l'extrémité du tuyau, **caractérisé en ce que**,
il comporte un insert (13), ledit insert étant percé de part en part d'un alésage formé au moins en partie par un ajutage calibré (15) propre à assurer une détente adiabatique en ligne et un element (10) de fixation dudit insert sur l'extrémité du tuyau souple, ledit insert comportant an moins un tamis (28,29) en ligne et comprenant de plus d'un côté une partie tubulaire (21) insérée en force dans l'extrémité du tuyau, en vis-à-vis de la douille de sertissage, et de l'autre côté une partie (16) insérée à frottement dans l'embout de tube rigide.

9. Circuit selon la revendication 8, **caractérisé en ce que** la douille de sertissage est constituée par une partie distale (10) du tube.

10. Circuit selon la revendication 8, **caractérisé en ce que** l'élément de sertissage est constituée par un manchon d'extrémité rapporté, fixé de façon inamovible sur le tube.

11. Circuit selon l'une quelconque des revendications 8 à 10, **caractérisé en ce que** l'insert (13) appartenant au dispositif (7) est réalisé selon l'une quelconque des revendications 1 à 7.

## Patentansprüche

1. Entspannungsvorrichtung (7) für eine Kühlflüssigkeit für einen Kreislauf, der einen biegsamen Schlauch (4) und ein Einsatzstück (13) enthält, das durchgehend mit einer Bohrung (14, 15) versehen ist, die mindestens teilweise aus einer kalibrierten Düse (15) besteht und geeignet ist, in Folge eine adiabatische Entspannung sicherzustellen, und mit einem Befestigungselement (10) des genannten Einsatzstückes am äußeren Ende des flexiblen Schlauches oder innerhalb des flexiblen Schlauches,
**dadurch gekennzeichnet ist, dass**
sie mindestens ein Sieb in Reihe (28, 29) enthält.

2. Entspannungsvorrichtung nach Anspruch 1,
**dadurch gekennzeichnet,**
**dass** das Sieb (28, 29) als Konusstumpf aus durchlässigem Kunststoffmaterial geformt ist und auf der oben liegenden Seite und/oder der unten liegenden Seite des Einsatzstückes befestigt ist, zum Beispiel durch eine Formgussschale.

3. Entspannungsvorrichtung nach Anspruch 1,
**dadurch gekennzeichnet,**
**dass** das Sieb (28,29) ein Filter aus geflochtenem Stoff ist.

4. Entspannungsvorrichtung nach einem der vorangegangenen Ansprüche,
**dadurch gekennzeichnet,**
**dass** die kalibrierte Düse (15) einen Durchmesser zwischen 0,7 mm und 2 mm besitzt und eine Länge von zwischen 30 mm und 50 mm hat.

5. Entspannungsvorrichtung nach einem der vorangegangenen Ansprüche,
**dadurch gekennzeichnet,**
**dass** das Einsatzstück (13) in die Verbindung zwischen einem Stutzen (2) des starren Rohres (3) und dem äußeren Ende (5) des genannten weichen, flexiblen Schlauches (14) eingesetzt werden kann und auf der einen Seite ein röhrenförmiges Teil (21) besitzt, welches geeignet ist, durch Druck in das äußere Ende des Schlauches gegenüber dem Befestigungselement gesteckt zu werden, und auf der anderen Seite ein Stück (16), welches in den Stutzen des starren Rohres eingeführt werden kann.

6. Vorrichtung nach Anspruch 5,
**dadurch gekennzeichnet,**
**dass** das Einsatzstück (13) wenigstens eine Ringkerbe (19) enthält, versehen mit einer Wulstdichtung (20) im Stutzen des starren Rohres.

7. Vorrichtung nach einem der vorangegangenen Ansprüche,
**dadurch gekennzeichnet,**
**dass** das Einsatzstück (13) mindestens eine Ringkerbe (25) besitzt, versehen mit einer Wulstdichtung (26) in dem Schlauch.

8. Klimatisierungskreislauf (1) zur Erzielung einer Gasentspannung mit einem starren Rohr (3) und einem Stutzen (2), einem flexiblen Schlauch (4) und einer Falzhülse (10) am Stutzen und äußeren Ende des Schlauches,
**dadurch gekennzeichnet,**
**dass** er ein Einsatzstück (13) enthält, das durchgängig mit einer Bohrung versehen ist, die zumindest teilweise aus einer kalibrierten Düse besteht und geeignet ist, in Folge eine adiabatische Entspannung sicher zu stellen, und am äußeren Ende des flexiblen Schlauches ein Befestigungselement (10) des Einsatzstückes enthält, dieses Einsatzstück mindestens ein Sieb in Reihe (28, 29) und darüberhinaus auf einer Seite ein durch Druck ins äußere Ende des Schlauches eingebrachtes rohrförmiges Teilstück gegenüber der Befestigungsbuchse und auf der anderen Seite ein durch Reibung in den Stutzen der starren Röhre eingesetztes Teil aufweist.

9. Kreislauf nach Anspruch 8,
**dadurch gekennzeichnet,**
**dass** die Befestigungsbuchse aus einem von dem Rohr entfernt liegenden Teil besteht.

10. Kreislauf nach Anspruch 8,
**dadurch gekennzeichnet,**
**dass** das Befestigungselement aus einer Muffe besteht, deren äußere Ränder zurück gebogen sind und somit nicht mehr vom Rohr entfernt werden können.

11. Kreislauf nach einem der Ansprüche 8 bis 10,
**dadurch gekennzeichnet,**
**dass** das Einsatzstück (13), das zu der Vorrichtung (7) gehört, nach einem der Ansprüche 1 bis 7 gebildet ist.

## Claims

1. Pressure-reducing device (7) for refrigerant pertaining to a circuit comprising a hose (4), and an insert (13) through which there passes, from side to side, a bore (14, 15) formed at least partly by a calibrated nozzle (15) suitable for ensuring on-line adiabatic expansion, and an element (10) for fixing said insert to the end of the hose or inside said hose, **characterised in that** it comprises at least one on-line screen (28, 29).

2. Pressure-reducing device according to Claim 1, **characterised in that** the screen (28, 29) is formed by a truncated cone made of porous plastic fixed to the upstream and/or downstream portion of the insert, for example by duplicate moulding.

3. Pressure-reducing device according to Claim 1, **characterised in that** the screen (28, 29) is a braided fabric filter.

4. Pressure-reducing device according to any one of the preceding claims, **characterised in that** the calibrated nozzle (15) has a diameter comprised between 0.7 mm and 2 mm, and a length comprised between 30 mm and 50 mm.

5. Pressure-reducing device according to any one of the preceding claims, **characterised in that** the insert (13) is suitable for being placed at the junction between an end-piece (2) of a rigid tube (3) and the end (5) of said flexible hose (14), and comprises on one side a tubular portion (21) suitable for being force-fitted into the end of the hose, facing the fixing element, and on the other side a portion (16) suitable for being inserted into the end-piece of the rigid tube.

6. Device according to Claim 5, **characterised in that** the insert (13) comprises at least one annular groove (19) fitted with an O ring (20) for producing a seal with the end-piece of the rigid tube.

7. Pressure-reducing device according to any one of the preceding claims, **characterised in that** the insert (13) comprises at least one annular groove (25) fitted with an O ring (26) for producing a seal with the hose.

8. Air conditioning circuit (1) for producing the expansion of a gas, comprising a rigid tube (3) provided with an end-piece (2), a flexible hose (4), and a bush (10) for crimping the end-piece to the end of the hose, **characterised in that** it comprises an insert (13), said insert having a bore passing through it from side to side, said bore being formed at least partly by a calibrated nozzle (15) suitable for ensuring on-line adiabatic expansion and an element (10) for fixing said insert to the end of the hose, said insert comprising at least one on-line screen (28, 29) and further comprising, on one side, a tubular portion (21) force-fitted into the end of the hose, facing the crimping bush, and on the other side a portion (16) inserted with friction into the end-piece of the rigid tube.

9. Circuit according to Claim 8, **characterised in that** the crimping bush is constituted by a distal portion (10) of the tube.

10. Circuit according to Claim 8, **characterised in that** the crimping element is constituted by a detachable end sleeve, fixed permanently to the tube.

11. Circuit according to any one of Claims 8 to 10, **characterised in that** the insert (13) pertaining to the device (7) is produced according to any one of Claims 1 to 7.
